# EUROPEAN PATENT SPECIFICATION

(11) **EP 4 230 598 B1**
(45) Date of publication and mention of the grant of the patent: **28.01.2026**
(21) Application number: 21890810.1
(22) Date of filing: 17.09.2021
(51) Int. Cl.: C04B 37/00, G21C 3/06

(54) **BRAZING FILLER MATERIAL AND METHOD FOR PREPARING SAMPLE, AND JOINING METHOD FOR SILICON CARBIDE CLADDING**
HARTLOT UND VERFAHREN ZUM VORBEREITEN EINER PROBE, UND VERFAHREN ZUM VERBINDEN FÜR EINE SILICIUMCARBIDVERKLEIDUNG
MATÉRIAU DE REMPLISSAGE DE BRASURE ET PROCÉDÉ DE PRÉPARATION D'UN ÉCHANTILLON, ET PROCÉDÉ DE RACCORDEMENT POUR UNE GAINE EN CARBURE DE SILICIUM

(30) Priority: 12.11.2020 CN 202011265156
(43) Date of publication of application: 23.08.2023
(73) Proprietor: China Nuclear Power Technology Research Institute Co., Ltd., Shenzhen, Guangdong 518031 (CN); Ling Dong Nuclear Power Co., Ltd, Shenzhen, Guangdong 518028 (CN); China General Nuclear Power Corporation, Shenzhen, Guangdong 518028 (CN); CGN Power Co., Ltd., Shenzen, Guangdong 518028 (CN)
(72) Inventor: XUE, Jiaxiang, Shenzhen, Guangdong 518031 (CN); LIAO, Yehong, Shenzhen, Guangdong 518031 (CN); REN, Qisen, Shenzhen, Guangdong 518031 (CN); LIU, Tong, Shenzhen, Guangdong 518031 (CN); ZHAI, Jianhan, Shenzhen, Guangdong 518031 (CN); MA, Haibin, Shenzhen, Guangdong 518031 (CN); ZHANG, Xiansheng, Shenzhen, Guangdong 518031 (CN); ZHANG, Yongdong, Shenzhen, Guangdong 518031 (CN); LI, Rui, Shenzhen, Guangdong 518031 (CN); LIU, Yang, Shenzhen, Guangdong 518031 (CN)
(74) Representative: Westphal, Mussgnug & Partner, Patentanwälte mbB
(86) International application number: PCT/CN2021/119168
(87) International publication number: WO 2022/100282

(56) References cited:
- CN-A- 103 964 884
- CN-A- 107 151 147
- CN-A- 109 400 167
- CN-A- 109 437 957
- CN-A- 110 903 102
- CN-A- 111 470 878
- CN-A- 112 608 164
- JP-A- H0 753 278
- ZHAO CHENG-CAI ET AL: "Facile joining of SiC ceramics with screen-printed polycarbosilane without pressure", JOURNAL OF THE EUROPEAN CERAMIC SOCIETY, ELSEVIER, AMSTERDAM, NL, vol. 41, no. 3, 28 October 2020 (2020-10-28), pages 2157 - 2161, XP086375658, ISSN: 0955-2219, [retrieved on 20201028], DOI: 10.1016/J.JEURCERAMSOC.2020.10.042
- FERRARIS M ET AL: "Joining of SiC-based materials for nuclear energy applications", JOURNAL OF NUCLEAR MATERIALS, vol. 417, no. 1, 22 December 2010 (2010-12-22), pages 379 - 382, XP028305663, ISSN: 0022-3115, [retrieved on 20101222], DOI: 10.1016/J.JNUCMAT.2010.12.160
- FRANCIS A ET AL: "Fabrication and cytotoxicity assessment of novel polysiloxane/bioactive glass films for biomedical applications", CERAMICS INTERNATIONAL, ELSEVIER, AMSTERDAM, NL, vol. 42, no. 14, 29 June 2016 (2016-06-29), pages 15442 - 15448, XP029686861, ISSN: 0272-8842, DOI: 10.1016/J.CERAMINT.2016.06.195
- KATOH YUTAI, SNEAD LANCE L., CHENG TING, SHIH CHUNGHAO, LEWIS W. DANIEL, KOYANAGI TAKAAKI, HINOKI TATSUYA, HENAGER CHARLES H., FER: "Radiation-tolerant joining technologies for silicon carbide ceramics and composites", JOURNAL OF NUCLEAR MATERIALS, ELSEVIER B.V., NETHERLANDS, vol. 448, no. 1-3, 1 May 2014 (2014-05-01), NETHERLANDS , pages 497 - 511, XP055929342, ISSN: 0022-3115, DOI: 10.1016/j.jnucmat.2013.10.002
- HENAGER, C.H. SHIN, Y. BLUM, Y. GIANNUZZI, L.A. KEMPSHALL, B.W. SCHWARZ, S.M.: "Coatings and joining for SiC and SiC-composites for nuclear energy systems", JOURNAL OF NUCLEAR MATERIALS, ELSEVIER B.V., NETHERLANDS, vol. 367-370, 19 July 2007 (2007-07-19), NETHERLANDS , pages 1139 - 1143, XP022164906, ISSN: 0022-3115, DOI: 10.1016/j.jnucmat.2007.03.189
- M. FERRARIS; M. SALVO; V. CASALEGNO; S. HAN; Y. KATOH; H.C. JUNG; T. HINOKI; A. KOHYAMA;: "Joining of SiC-based materials for nuclear energy applications", JOURNAL OF NUCLEAR MATERIALS, ELSEVIER B.V., NETHERLANDS, vol. 417, no. 1, NETHERLANDS , pages 379 - 382, XP028305663, ISSN: 0022-3115, DOI: 10.1016/j.jnucmat.2010.12.160

## Description

### FIELD OF THE INVENTION

The invention relates to the technical field of nuclear fuels, in particular to a brazing filler material and a method for preparing the brazing filler material, and a joining method for a silicon carbide cladding.

### DESCRIPTION OF THE RELATED ART

Silicon carbide (SiC) ceramics have the characteristics of high strength, high hardness, low density, oxidation resistance and corrosion resistance. In addition, the SiC ceramics have excellent properties such as small coefficient of thermal expansion, high thermal conductivity, good high temperature performance, and low neutron absorption cross section, such that they have been widely used in nuclear applications such as clad fuel elements, inner walls of nuclear reactor vessels, and linings of reactor pipes.

A cladding is mainly composed of a cladding tube and an end plug joined together, which serve in high temperature, high pressure, high radiation and hydrothermal corrosion environments. Since SiC is a strong covalent bond compound with high melting point and small self-diffusion coefficient, it is rather difficult to achieve direct joining between the cladding tube and the end plug. What is needed, therefore, is a brazing filler material and a joining method that can adapt to the above environmental conditions. At present, silicon carbide joining methods used in the nuclear field mainly include precursor joining method, glass-ceramic brazing method, MAX phase joining method, NITE phase joining method and mechanical joining.

Each of the above methods has its own advantages and disadvantages. The precursor joining method has the advantages of low joining pressure, low joining temperature, small thermal stress at the joint, good hydrothermal corrosion resistance and radiation resistance. However, a large amount of gas will be released during the precursor pyrolysis process, which causes a volume shrinkage and the formation of pores, resulting in a poor joining strength and hermeticity of the SiC joint. The glass-ceramic joining method can form a joint with good sealing performance and good heat resistance and thermal shock resistance, but the glass ceramics have poor radiation resistance and poor hydrothermal corrosion resistance. The MAX phase joining method can achieve a joint with good thermal shock resistance and oxidation resistance, but the joint is easy to decompose at high temperature and has poor radiation resistance. Although the joint formed by the NITE phase joining method has a good joining strength, the joining pressure is too high, which is unfavorable for the cladding joining.

In view of the advantages of precursor joining in the field of nuclear applications, especially that the joints have good hydrothermal corrosion resistance and radiation resistance, in order to increase the shear strength of the precursor joining, it is highly desirable to improve the precursor joining method to reduce the volume shrinkage during the joining process. In addition, if the thickness of the interlayer is too small, the difficulty in assembling the cladding tube with the end plug may be increased, and the issue of poor hermeticity may easily occur.

Publications ZHAO CHENG-CAI ET AL: "Facile joining of SiC ceramics with screenprinted polycarbosilane without pressure", JOURNAL OF THE EUROPEAN CERAMIC SOCIETY, ELSEVIER, AMSTERDAM, NL, vol. 41, no. 3, 28 October 2020 (2020-10-28), pages 2157-2161, XP086375658; FERRARIS M ET AL: "Joining of SiC-based materials for nuclear energy applications", JOURNAL OF NUCLEAR MATERIALS, vol. 417, no. 1 , pages 379-382, XP028305663; JP H07 53278 A; and FRANCIS A ET AL: "Fabrication and cytotoxicity assessment of novel polysiloxane/bioactive glass films for biomedical applications", CERAMICS INTERNATIONAL, ELSEVIER, AMSTERDAM, NL, vol. 42, no. 14, 29 June 2016 (2016-06-29), pages 15442-15448, XP029686861, are considered to be relevant to the present application.

### SUMMARY OF THE INVENTION

The technical problem to be solved by the present invention is to provide a brazing filler material for use in joining of a silicon carbide cladding and a method for preparing the brazing filler material, and a joining method for a silicon carbide clad using the brazing filler material. This problem is solved by a brazing filler material having the features of claim 1, a method for preparing a brazing filler material having the features of claim 4 and a joining method for a silicon carbide cladding having the features of claim 5.

The technical solution the present invention adopts to solve the technical problem is that a brazing filler material is provided for use in joining of a silicon carbide cladding, and the brazing filler metal includes the following raw materials: precursor, glass powder and organic solvent;
the mass ratio of the precursor to the glass powder is 90-98 : 2-10.

The precursor is at least one of polycarbosilane and polysilazane.

The raw materials of the glass powder include the raw material of the glass powder comprises one or more of CA, SARe₂O₃ and SMRe₂O₃;
in the CA, SARe₂O₃ and SMRe₂O₃:
C represents CaO; A represents Al₂O₃; S represents SiO₂; M represents MgO; Re represents Sc, Y, La, Ce, Pr, Nd, Pm, Sm, Eu, Gd, Tb, Dy, Ho, Er, Tm, Yb or Lu.

Preferably, the mass ratio in the CA is that CaO : Al₂O₃ = 45-55 : 55-45;
the mass ratio in the SARe₂O₃ is that SiO₂ : Al₂O₃ : Re₂O₃ = 30-60 : 15-30 : 25-40;
the mass ratio in the SMRe₂O₃ is that SiO₂ : MgO : Re₂O₃ = 30-60 : 15-30 : 25-40.

Preferably, the glass powder is obtained by water quenching and then milling after heating the one or more of CA, SARe₂O₃ and SMRe₂O₃ at 1400°C to 1750°C for 0.5h to 4h

Preferably, the organic solvent is at least one of xylene, toluene, absolute ethanol and acetone.

The present invention also provides a method for preparing a brazing filler material, comprising the following steps: mixing and ball milling the precursor and the glass powder to obtain mixed powder, mixing uniformly the mixed powder and the organic solvent to obtain a slurry which is the brazing filler material.

The present invention also provides a joining method for a silicon carbide cladding, comprising the following steps:
S1. applying the brazing filler material according to any one of the above brazing filler materials between a cladding tube and an end plug that match with each other;
S2, sequentially performing a precursor curing treatment, a precursor pyrolysis treatment and a heat treatment on the brazing filler material;
S3. forming a interlayer by the brazing filler material that has undergone the heat treatment, the interlayer joining the cladding tube and the end plug together.

Preferably, in step S2, the temperature for the precursor curing treatment is 100°C to 300°C;
the temperature for the precursor pyrolysis treatment is 800°C to 1200°C;
the temperature for the heat treatment is 1300°C to 1500°C.

Preferably, in the precursor curing treatment, the temperature is raised to 100°C to 300°C at a heating rate of 2°C/min, and the temperature is maintained for 0.5h to 2h; the precursor curing pressure is 0.01MPa to 1MPa;
in the precursor pyrolysis treatment, the temperature is raised to 800°C to 1200°C at a heating rate of 5°C/min to 20°C/min, and the temperature is maintained for 0.5h to 2h; the precursor pyrolysis pressure is 0.01MPa to 1MPa;
in the heat treatment, the temperature is raised to 1300°C to 1500°C at a heating rate of 1°C/min to 20°C/min, and the temperature is kept for 0.5h to 2h.

Preferably, in step S3, a thickness of the interlayer is 50µm to 100µm.

In the brazing filler material of the invention for use in the joining of the silicon carbide cladding, the additive of glass phase formed by the glass powder has good wettability to silicon carbide, resulting in a high joining strength. The ratio of the glass powder is adjustable, so that the coefficient of thermal expansion of the glass addition phase is adjustable, and the stress of the formed joint is controllable. A thick dense interlayer can be achieved with good hermeticity, which is beneficial to the assembly of the silicon carbide cladding in industry.

The brazing filler material of the invention is applied in the joining of the cladding to improve the structural strength and integrity of the cladding, thereby improving the safety of the nuclear reactor, and actively promoting the application of the new cladding material in the nuclear reactor.

### DETAILED DESCRIPTION OF EMBODIMENTS

The brazing filler material of the present invention is used for joining of silicon carbide cladding in which an end plug is joined to a cladding tube.

The brazing filler material includes the following raw materials: precursor, glass powder and organic solvent.

Among them, the mass ratio of the precursor to the glass powder is 90-99 : 10-1.

The precursor is polycarbosilane (PCS).

The raw material of the glass powder includes one or more of CA, SARe₂O₃ and SMRe₂O₃, and the glass powder is obtained by water quenching and then milling the one or more of CA, SARe₂O₃ and SMRe₂O₃ after the raw material is maintained at 1400°C to 1750°C for 0.5h to 4h.

In CA, SARe₂O₃ and SMRe₂O₃, C represents CaO; A represents Al₂O₃; S represents SiO₂; M represents MgO; Re represents Sc, Y, La, Ce, Pr, Nd, Pm, Sm, Eu, Gd, Tb, Dy, Ho, Er, Tm, Yb or Lu.

Further, the mass ratio in CA is that CaO : Al₂O₃ = 45-55 : 55-45; the mass ratio in SARe₂O₃ is that SiO₂ : Al₂O₃ : Re₂O₃ = 30-60 : 15-30 : 25-40; The mass ratio in SMRe₂O₃ is that SiO₂ : MgO : Re₂O₃ = 30-60 : 15-30 : 25-40.

The organic solvent is at least one of xylene, toluene, absolute ethanol and acetone.

The brazing filler material for joining of the present invention is prepared by the following method: mixing the precursor and the glass powder, ball milling the precursor and the glass powder to obtain mixed powder, mixing uniformly the mixed powder and the organic solvent to obtain a slurry which is the brazing filler material. The amount of the organic solvent is designed so that a solid content of the obtained slurry is 30wt% to 60wt%.

Specifically, a planetary ball mill is used to ball-mill and mix the precursor and the glass powder, the ball-milling time is 8h-24h, and the ball-milling speed is 400r/min.

The brazing filler material of the present invention is applied in the joining of the silicon carbide cladding, and the joining method for the silicon carbide cladding may include the following steps:
S1. applying the brazing filler material between a cladding tube and an end plug that match with each other.

It can be understood that the end plug is mainly joined at an end opening of the cladding tube, and the brazing filler material is applied on a surface at the end opening of the cladding tube or a joining end of the end plug, or on both the surface of the end opening of the cladding tube and the joining end of the end plug according to needs. After the end plug is fitted into the end opening of the cladding tube, the brazing filler material is placed between the cladding tube and the end plug to form a to-be-joined sample.

A thickness of the applied brazing filler material can be adjusted according to a desired thickness of the interlayer to be formed.

S2. sequentially performing a precursor curing treatment, a precursor pyrolysis treatment and a heat treatment on the brazing filler material.

In step S2, the to-be-joined sample is first placed at 100°C to 300°C to perform a precursor curing treatment, so as to cure the precursor in the brazing filler material. During the precursor curing treatment, the temperature is raised to 100°C to 300°C at a heating rate of 2°C/min, and the temperature is maintained for 0.5h to 2h; a curing pressure of the precursor is 0.01MPa to 1MPa.

The to-be-joined sample that has undergone the precursor curing treatment is then placed at 800°C to 1200°C to perform the precursor pyrolysis treatment, so as to pyrolyze the precursor in the brazing filler material. During the precursor pyrolysis treatment, the temperature is raised to 800°C to 1200°C at a heating rate of 5°C/min to 20°C/min, and the temperature is maintained for 0.5h to 2h; the precursor pyrolysis pressure is 0.01MPa to 1MPa.

Finally, the to-be-joined sample that has undergone the precursor pyrolysis treatment is placed at 1300°C to 1500°C to perform the heat treatment. During the heat treatment, the temperature is raised to 1300°C to 1500°C at a heating rate of 1°C/min to 20°C/min, and the temperature is maintained for 0.5h to 2h.

The heat treatment can adjust the degree of crystallization of the glass phase at the interlayer, and improve the radiation resistance and corrosion resistance of the joint of the cladding tube and the end plug.

S3. forming a interlayer by the brazing filler material that has undergone the heat treatment, the interlayer joining the cladding tube and the end plug together.

Wherein, the interlayer formed by the brazing filler material is dense and has a good hermeticity. The thickness of the interlayer is 50µm to 100µm.

The room temperature shear strength is 40MPa to100MPa, the high temperature shear strength at 1200°C is 45MPa to 120MPa, and the leak-rate is 0 to 1×10⁻⁹Pa·m³/s.

The present invention will be further described below by way of specific embodiments.

### Example 1

### 1. Preparation:

Polycarbosilane (PCS) and glass powder CA (C=CaO, A=Al₂O₃) are used as raw materials; wherein, CA has been obtained by water quenching and then milling the raw material after the raw material was maintained at 1650°C for 2h. PCS and CA are uniformly mixed in a mass ratio of 95:5, and the mixed powder is mixed with xylene to form a brazing filler material with a solid content of 50wt%. The brazing filler material is applied between the cladding tube and the end plug to form a to-be-joined sample; the to-be-joined sample undergoes a precursor curing treatment at 300°C, and then undergoes a precursor pyrolysis treatment at a pyrolysis temperature of 1200°C and a pyrolysis pressure of 1MPa, and finally undergoes a subsequent heat treatment at 1500°C for 2h to obtain the silicon carbide cladding.

### 2. Performance test:

The thickness of the interlayer formed by the brazing filler material is 50µm, the room temperature shear strength is 100MPa, the high temperature shear strength at 1200°C is 110MPa, and the leak-rate is 0.5×10⁻⁹Pa·m³/s.

### Example 2

### 1. Preparation:

Polycarbosilane (PCS) and glass powder CA (C=CaO, A=Al₂O₃) are used as raw materials; wherein, CA has been obtained by water quenching and then milling the raw material after the raw material was maintained at 1700°C for 2 h. PCS and CA are uniformly mixed in a mass ratio of 98 : 2, and the mixed powder is mixed with xylene to form a brazing filler material with a solid content of 60wt%. The brazing filler material is applied between the cladding tube and the end plug to form a to-be-joined sample; the to-be-joined sample undergoes a precursor curing treatment at 250°C, and then undergoes a precursor pyrolysis treatment at a pyrolysis temperature of 1100°C and a pyrolysis pressure of 0.1MPa, and finally undergoes a subsequent heat treatment at 1350°C for 1h to obtain the silicon carbide cladding.

### 2. Performance test:

The thickness of the interlayer formed by the brazing filler material is 100µm, the room temperature shear strength is 60MPa, the high temperature shear strength at 1200°C is 80MPa, and the leak-rate is 0.8× 10⁻⁹Pa·m³/s.

### Example 3

### 1. Preparation:

Polycarbosilane (PCS) and glass powder SAY (S=SiO₂, A=Al₂O₃, Y=Y₂O₃) are used as raw materials; wherein, the glass powder SAY has been obtained by water quenching and then milling the raw material after the raw material was maintained at 1700°C for 2h. The PCS and SAY are uniformly mixed in a mass ratio of 90 : 10, and the mixed powder is mixed with xylene to form a brazing filler material with a solid content of 30wt%. The brazing filler material is applied between the cladding tube and the end plug to form a to-be-joined sample; the to-be-joined sample undergoes a precursor curing treatment at 280°C, and then undergoes a precursor pyrolysis treatment at a pyrolysis temperature of 1150°C and a pyrolysis pressure of 0.5MPa, and finally undergoes a subsequent heat treatment at 1500°C for 0.5h to obtain the silicon carbide cladding.

### 2. Performance test:

The thickness of the interlayer formed by the brazing filler material is 60µm, the room temperature shear strength is 55MPa, the high temperature shear strength at 1200°C is 70MPa, and the leak-rate is 0.2× 10⁻⁹Pa·m³/s.

### Example 4

### 1. Preparation:

Polycarbosilane (PCS) and glass powder SMY (M=MgO, Y=Y₂O₃) are used as raw materials; wherein, the glass powder SMY has been obtained by water quenching and then milling the raw material after the raw material was maintained at 1750°C for 1h. The PCS and SMY are uniformly mixed in a mass ratio of 96:4, and the mixed powder is mixed with xylene to form a brazing filler material with a solid content of 45wt%. The brazing filler material is applied between the cladding tube and the end plug to form a to-be-joined sample; the to-be-joined sample undergoes a precursor curing treatment at 300°C, and then undergoes a precursor pyrolysis treatment at a pyrolysis temperature of 1200°C and a pyrolysis pressure of 1MPa, and finally undergoes a subsequent heat treatment at 1500°C for 2h to obtain the silicon carbide cladding.

### 2. Performance test:

The thickness of the interlayer formed by the brazing filler material is 80µm, the room temperature shear strength is 80MPa, the high temperature shear strength at 1200°C is 100MPa, and the leak-rate is 0.5× 10⁻⁹Pa·m³/s.

### Example 5

### 1. Preparation:

Polycarbosilane (PCS) and glass powder SANd (A=Al₂O₃, Nd=Nd₂O₃) are used as raw materials; wherein, the glass powder SANd has been obtained by water quenching and then milling the raw material after the raw material was maintained at 1550°C for 1.5h. The PCS and SANd are uniformly mixed in a mass ratio of 95 : 5, and the mixed powder is mixed with xylene to form a brazing filler material with a solid content of 35wt%. The brazing filler material is applied between the cladding tube and the end plug to form a to-be-joined sample; the to-be-joined sample undergoes a precursor curing treatment at 280°C, and then undergoes a precursor pyrolysis treatment at a pyrolysis temperature of 1200°C and a pyrolysis pressure of 0.5MPa, and finally undergoes a subsequent heat treatment at 1500°C for 1h to obtain the silicon carbide cladding.

### 2. Performance test:

The thickness of the interlayer formed by the brazing filler material is 85µm, the room temperature shear strength is 80MPa, the high temperature shear strength at 1200°C is 100MPa, and the leak-rate is 0.4× 10⁻⁹Pa·m³/s.

### Comparative Example 1

Polycarbosilane (PCS) is used as the raw material, the PCS and xylene are mixed in a mass ratio of 1 : 1 to prepare a slurry, the prepared slurry is applied between the cladding tube and the end plug to form a to-be-joined sample. The to-be-joined sample undergoes a precursor curing treatment at 300°C, and then undergoes a precursor pyrolysis treatment at a pyrolysis temperature of 1200°C and a pyrolysis pressure of 1MPa, and finally undergoes a heat treatment at 1500°C to obtain the silicon carbide cladding.

The obtained silicon carbide cladding has many pore defects, and the thickness of the interlayer is less than 5µm. This is because the precursor generates a large amount of pyrolysis gas during the pyrolysis process, which causes great loss of the joining material during the joining process, resulting in the small thickness of the interlayer and a large amount of pore defects present in the interlayer. A room temperature shear strength test shows that the room temperature shear strength is only 10.57MPa. A high temperature shear test performed at 1200°C shows that the high temperature shear strength is only 6.01MPa, and the leak-rate is greater than 10⁻⁴Pa·m³/s.

### Comparative Example 2

CA (49.7 wt% CaO; 50.3 wt% Al₂O₃) was maintained at 1500 °C for 2h, and was then water quenched and milled; CA is used as the raw material, the CA and xylene are mixed at a mass ratio of 1 : 1 to prepare a slurry, and the prepared slurry is applied between the cladding tube and the end plug to form a to-be-joined sample. The above to-be-joined sample first undergoes a precursor curing treatment at 300°C, and then undergoes a precursor pyrolysis treatment at a pyrolysis temperature of 1200°C and a pyrolysis pressure of 1MPa, and finally undergoes a heat treatment at 1500°C to obtain the silicon carbide cladding.

The thickness of the interlayer of the silicon carbide cladding is about 50µm, and the room temperature joining strength reaches 60MPa, but the shear strength at 1200°C is only 8.27MPa, and the leak-rate is 10⁻⁹ Pa·m³/s.

In summary, compared with Comparative Examples 1-2, Examples 1-5 adopt the combination of the precursor and the glass powder as the brazing filler material to achieve a thicker dense interlayer which has a high joining strength at both room temperature and high temperature of 1200°C and a satisfying leak-rate.

The above are only embodiments of the present invention and do not limit the scope of the present invention. The scope of the invention is defined by the claims.

## Claims

1. A brazing filler material for use in joining of a silicon carbide cladding, **characterized in that** the brazing filler material comprises the following raw materials: precursor, glass powder and organic solvent;
wherein the mass ratio of the precursor to the glass powder is 90-98 : 2-10;
wherein the precursor is at least one of polycarbosilane and polysilazane; and
wherein the raw material of the glass powder comprises one or more of CA, SARe₂O₃ and SMRe₂O₃;
wherein in the CA, SARe₂O₃ and SMRe₂O₃:
C represents CaO; A represents Al₂O₃; S represents SiO₂; M represents MgO; and Re represents Sc, Y, La, Ce, Pr, Nd, Pm, Sm, Eu, Gd, Tb, Dy, Ho, Er, Tm, Yb or Lu.

2. The brazing filler material according to claim 1, **characterized in that** the mass ratio in the CA is that CaO : Al₂O₃ = 45-55 : 55-45;
the mass ratio in the SARe₂O₃ is that SiO₂ : Al₂O₃ : Re₂O₃ = 30-60 : 15-30 : 25-40;
the mass ratio in the SMRe₂O₃ is that SiO₂ : MgO : Re₂O₃ = 30-60 : 15-30 : 25-40.

3. The brazing filler material according to claim 1, **characterized in that** the organic solvent is at least one of xylene, toluene, absolute ethanol and acetone.

4. A method for preparing a brazing filler material according to any one of claims 1-3, **characterized in that** it comprises the following steps: mixing and ball milling the precursor and the glass powder to obtain mixed powder, mixing uniformly the mixed powder and the organic solvent to obtain a slurry which is the brazing filler material.

5. A joining method for a silicon carbide cladding, **characterized by** comprising the following steps:
S1. applying the brazing filler material according to any one of claims 1-3 between a cladding tube and an end plug that match with each other;
S2, sequentially performing a precursor curing treatment, a precursor pyrolysis treatment and a heat treatment on the brazing filler material;
S3. forming a interlayer by the brazing filler material that has undergone the heat treatment, the interlayer joining the cladding tube and the end plug together.

6. The joining method for a silicon carbide cladding according to claim 5 **characterized in that**, in step S2, the temperature for the precursor curing treatment is 100°C to 300°C;
the temperature for the precursor pyrolysis treatment is 800°C to 1200°C;
the temperature for the heat treatment is 1300°C to 1500°C.

7. The joining method for a silicon carbide cladding according to claim 6, **characterized in that**,
in the precursor curing treatment, the temperature is raised to 100°C to 300°C at a heating rate of 2°C/min, and the temperature is maintained for 0.5h to 2h; the precursor curing pressure is 0.01MPa to 1MPa;
in the precursor pyrolysis treatment, the temperature is raised to 800°C to 1200°C at a heating rate of 5°C/min to 20°C/min, and the temperature is maintained for 0.5h to 2h; the precursor pyrolysis pressure is 0.01MPa to 1MPa;
in the heat treatment, the temperature is raised to 1300°C to 1500°C at a heating rate of 1°C/min to 20°C/min, and the temperature is maintained for 0.5h to 2h.

8. The joining method for a silicon carbide cladding according to any one of claims 5 to 7, **characterized in that**, in step S3, a thickness of the interlayer is 50µm to 100µm.

## Patentansprüche

1. Hartlötfüllmaterial zur Verwendung beim Verbinden eines Siliziumkarbid-Hüllrohrs, **dadurch gekennzeichnet, dass** das Hartlötfüllmaterial die folgenden Rohmaterialien umfasst:
Präkursor, Glaspulver und organisches Lösungsmittel;
wobei das Massenverhältnis des Präkursors zum Glaspulver 90-98 : 2-10 beträgt;
wobei der Präkursor mindestens eines von Polycarbosilan und Polysilazan ist; und
wobei das Rohmaterial des Glaspulvers eines oder mehrere von CA, SARe₂O₃ und SMRe₂O₃ umfasst;
wobei in dem CA, SARe₂O₃ und SMRe₂O₃
C CaO darstellt; A Al₂O₃ darstellt; S SiO₂ darstellt; M MgO darstellt; und Re Sc, Y, La, Ce, Pr, Nd, Pm, Sm, Eu, Gd, Tb, Dy, Ho, Er, Tm, Yb oder Lu darstellt.

2. Hartlötfüllmaterial nach Anspruch 1, **dadurch gekennzeichnet, dass** das Massenverhältnis in dem CA CaO : Al₂O₃ = 45-55 : 55-45 beträgt;
das Massenverhältnis in dem SARe₂O₃ SiO₂ : Al₂O₃ : Re₂O₃ = 30-60 : 15-30 : 25-40 beträgt;
das Massenverhältnis in dem SMRe₂O₃ SiO₂ : MgO : Re₂O₃ = 30-60 : 15-30 : 25-40 beträgt.

3. Hartlötfüllmaterial nach Anspruch 1, **dadurch gekennzeichnet, dass** das organische Lösungsmittel mindestens eines von Xylol, Toluol, absolutem Ethanol und Aceton ist.

4. Verfahren zum Herstellen eines Hartlötfüllmaterials nach einem der Ansprüche 1-3, **dadurch gekennzeichnet, dass** es die folgenden Schritte umfasst: Mischen und Kugelmahlen des Präkursors und des Glaspulvers zum Erlangen von Mischpulver, gleichmäßiges Mischen des Mischpulvers und des organischen Lösungsmittels zum Erlangen einer Aufschlämmung, welche das Hartlötfüllmaterial ist.

5. Verbindungsverfahren für ein Siliziumkarbid-Hüllrohr, **dadurch gekennzeichnet, dass** es die folgenden Schritte umfasst:
S1. Auftragen des Hartlötfüllmaterials nach einem der Ansprüche 1-3 zwischen einem Hüllrohr und einem Endstopfen, die miteinander zusammenpassen;
S2. sequenzielles Durchführen einer Präkursor-Aushärtebehandlung, einer Präkursor-Pyrolysebehandlung und einer Wärmebehandlung an dem Hartlötfüllmaterial;
S3. Bilden einer Zwischenschicht durch das Hartlötfüllmaterial, das die Wärmebehandlung durchlaufen hat, wobei die Zwischenschicht das Hüllrohr und den Endstopfen verbinden.

6. Verbindungsverfahren für ein Siliziumkarbid-Hüllrohr nach Anspruch 5, **dadurch gekennzeichnet, dass** in Schritt S2 die Temperatur für die Präkursor-Aushärtebehandlung 100 °C bis 300 °C beträgt;
die Temperatur für die Präkursor-Pyrolysebehandlung 800 °C bis 1200 °C beträgt;
die Temperatur für die Wärmebehandlung 1300 °C bis 1500 °C beträgt.

7. Verbindungsverfahren für ein Siliziumkarbid-Hüllrohr nach Anspruch 6, **dadurch gekennzeichnet, dass**,
in der Präkursor-Aushärtebehandlung die Temperatur auf 100 °C bis 300 °C bei einer Heizrate von 2 °C/min erhöht wird und die Temperatur für 0,5 h bis 2 h gehalten wird; der Präkursor-Aushärtedruck 0,01 MPa bis 1 MPa beträgt;
in der Präkursor-Pyrolysebehandlung die Temperatur auf 800 °C bis 1200 °C bei einer Heizrate von 5 °C/min bis 20 °C/min erhöht wird und die Temperatur für 0,5 h bis 2 h gehalten wird; der Präkursor-Pyrolysedruck 0,01 MPa bis 1 MPa beträgt;
in der Wärmebehandlung die Temperatur auf 1300 °C bis 1500 °C bei einer Heizrate von 1 °C/min bis 20 °C/min erhöht wird und die Temperatur für 0,5 h bis 2 h gehalten wird.

8. Verbindungsverfahren für ein Siliziumkarbid-Hüllrohr nach einem der Ansprüche 5 bis 7, **dadurch gekennzeichnet, dass** in Schritt S3 eine Dicke der Zwischenschicht 50 µm bis 100 µm beträgt.

## Revendications

1. Matériau de remplissage de brasure destiné à être utilisé pour la connexion d'une gaine en carbure de silicium, **caractérisé en ce que** le matériau de remplissage de brasure comprend les matières premières suivantes : précurseur, poudre de verre et solvant organique ;
dans lequel le rapport massique du précurseur à la poudre de verre est de 90-98 : 2-10 ;
dans lequel le précurseur est au moins un des éléments suivants : un polycarbosilane et un polysilazane ; et
dans lequel la matière première de la poudre de verre comprend un ou plusieurs des composés suivants : CA, SARe₂O₃ et SMRe₂O₃ ; dans lequel dans le CA, SARe₂O₃ et SMRe₂O₃ :
C représente CaO ; A représente Al₂O₃ ; S représente SiO₂; M représente MgO ; et Re représente Sc, Y, La, Ce, Pr, Nd, Pm, Sm, Eu, Gd, Tb, Dy, Ho, Er, Tm, Yb ou Lu.

2. Matériau de remplissage de brasure selon la revendication 1, **caractérisé en ce que** le rapport massique dans le CA est CaO : Al₂O₃ = 45-55 : 55-45 ;
le rapport massique dans le SARe₂O₃ est SiO₂ : Al₂O₃ : Re₂O₃ = 30-60 : 15-30 : 25-40 ;
le rapport massique dans le SMRe₂O₃ est SiO₂ : MgO : Re₂O₃ = 30-60 : 15-30 : 25-40.

3. Matériau de remplissage de brasure selon la revendication 1, **caractérisé en ce que** le solvant organique est au moins l'un des éléments suivants : xylène, toluène, éthanol absolu et acétone.

4. Procédé de préparation d'un matériau de remplissage de brasure selon l'une quelconque des revendications 1 à 3, **caractérisé en ce qu'**il comprend les étapes suivantes : le mélange et le broyage à billes du précurseur et de la poudre de verre pour obtenir une poudre mélangée, le mélange uniforme de la poudre mélangée et du solvant organique pour obtenir une suspension qui est le matériau de remplissage de brasure.

5. Procédé de connexion d'une gaine en carbure de silicium, **caractérisé en ce qu'**il comprend les étapes suivantes :
S1. l'application du matériau de remplissage de brasure selon l'une quelconque des revendications 1 à 3 entre un tube de gaine et un bouchon d'extrémité qui correspondent l'un à l'autre ;
S2. la réalisation successive d'un traitement de durcissement du précurseur, d'un traitement de pyrolyse du précurseur et d'un traitement thermique sur le matériau de remplissage de brasure ;
S3. la formation d'une couche intermédiaire par le matériau de remplissage de brasure qui a subi le traitement thermique, la couche intermédiaire connectant le tube de gaine et le bouchon d'extrémité.

6. Procédé de connexion d'une gaine en carbure de silicium selon la revendication 5, **caractérisé en ce que**, à l'étape S2, la température du traitement de durcissement du précurseur est de 100 °C à 300 °C ;
la température du traitement de pyrolyse du précurseur est de 800 °C à 1200 °C ;
la température du traitement thermique est de 1300 °C à 1500 °C.

7. Procédé de connexion d'une gaine en carbure de silicium selon la revendication 6, **caractérisé en ce que**,
lors du traitement de durcissement du précurseur, la température est portée de 100 °C à 300 °C à une vitesse de chauffage de 2 °C/min, et la température est maintenue pendant 0,5 h à 2 h ; la pression de durcissement du précurseur est de 0,01 MPa à 1 MPa ;
lors du traitement du traitement de pyrolyse du précurseur, la température est portée de 800 °C à 1200 °C à une vitesse de chauffage de 5 °C/min à 20 °C/min, et la température est maintenue pendant 0,5 h à 2 h ; la pression de pyrolyse du précurseur est de 0,01 MPa à 1 MPa ;
lors du traitement thermique, la température est portée de 1300 °C à 1500 °C à une vitesse de chauffage de 1 °C/min à 20 °C/min, et la température est maintenue pendant 0,5 h à 2 h.

8. Procédé de connexion d'une gaine en carbure de silicium selon l'une quelconque des revendications 5 à 7, **caractérisé en ce que**, à l'étape S3, une épaisseur de la couche intermédiaire est de 50 µm à 100 µm.
